# EUROPEAN PATENT SPECIFICATION

(11) **EP 3 679 242 B1**
(45) Date of publication and mention of the grant of the patent: **16.06.2021**
(21) Application number: 17764402.8
(22) Date of filing: 08.09.2017
(51) Int. Cl.: F03B 13/26, F03B 11/00

(54) **AN ENERGY GENERATING ARRANGEMENT POWERED BY TIDAL WATER**
DURCH GEZEITENWASSER BETRIEBENE ENERGIEERZEUGUNGSANORDNUNG
AGENCEMENT DE PRODUCTION D'ÉNERGIE ALIMENTÉ PAR L'EAU DE MARÉE

(43) Date of publication of application: 15.07.2020
(73) Proprietor: Tidetec AS, 0251 Oslo (NO)
(72) Inventor: KOLLANDSRUD, Arne, N-1165 Oslo (NO); AMLAND, Joachim, N-1392 Vettre (NO)
(74) Representative: Onsagers AS
(86) International application number: PCT/EP2017/072608
(87) International publication number: WO 2019/048053

(56) References cited:
- WO-A1-2005/017349
- DE-C- 417 570
- US-A- 4 261 171
- US-A- 4 468 153

## Description

### FIELD OF THE INVENTION

The present invention relates to an energy generating arrangement powered by tidal water.

### BACKGROUND OF THE INVENTION

The global community is facing major climate changes, and one important challenge is to replace fossil fuels with renewable energy sources, such as tidal power.

There is a general need for improved energy generating arrangements powered by tidal water.

An energy generating arrangement powered by tidal water is previously known from WO-2005/017349. This document teaches an apparatus for generating energy from a flow of water as a result of tidal forces. The apparatus comprises a turbine connected to a generator, and two water masses located on their respective side of the turbine. The turbine is arranged to be turned about a vertical axis. The position of the turbine is adjusted depending on the direction of flow prevailing at any given time between the first and the second flow space.

The previous arrangement required a complicated bearing arrangement, with larger radius and high construction cost. In addition, the bearing arrangement was placed where sediments naturally ended up, thereby causing wear on bearings, requiring more frequent service intervals.

US 4 468 153 A represents the technical features as they are presented in the preamble of the independent claim 1.

DE-417 570 discloses a tidal power generating arrangement. A turbine is arranged to be rotated by flowing water. The rotation of the turbine causes the operation of a water pump which provides pressurized water that may in turn impel an electric generator. The turbine and the water pump are included in a housing which is rotatable about a horizontal axis. The housing may be rotated in accordance with high and low tides, to ensure that flowing water enters the input side of the turbine and exits from the output side of the turbine. This background art arrangement involves several power dissipating stages or elements, including the water pump, the water flow provided by the water pump, water conduits with several flow restrictions, and a water motor. Hence, its overall power efficiency will be limited.

### SUMMARY OF THE INVENTION

An object of the invention is to provide an improved energy generating arrangement powered by flowing water and a method for providing such an arrangement, which may alleviate or overcome at least some of the disadvantages associated with the prior art.

The invention has been defined in the independent claim. Advantageous embodiments and further features are set forth in the dependent claims.

The invention, and various features and combinations of features of the invention, provides several advantageous technical effects, including the following:
(1) increasing efficiency by reducing water flow loss, i.e., water not running through the turbine,
(2) keeping inlet and outlet hydraulically smooth during operational, energy-generating state, i.e., when water flows through the turbine unit. Such smoothness has positive effects on the efficiency of the turbine.
(3) having the possibility to keep areas dry for maintenance/service of the arrangement, e.g. service of the turbine.

In some aspects, the cylindrical assembly that includes the turbine unit needs to be locked in different positions (operation forward/reverse or in service mode). Expandable seals provided by the invention will provide or contribute with a locking effect. In particular, the locking effect provided by the sealings may be varied and controlled by different levels of expanding/inflating the sealings. Another positive effect of the expandable/inflatable seal is vibration damping. The turbine may be intended to rotate with minimal vibration, but in case of vibration at certain rotational speeds, the expandable/inflatable seal acts as a vibration dampening device. Hence, detrimental oscillations or resonance may be reduced or avoided

The proposed sealing, locking and vibration dampening solution is a cost-effective solution, as it solves many problems with one solution.

A particular advantage of features or combinations of features of the invention, is that service/maintenance personnel or devices can access the turbine parts when the turbine is in a service position. Also, creating a "dry service room" for service/maintenance, is a challenge that has been solved. Hence, installation, inspection, service, replacement and removal may be facilitated.

### BRIEF DESCRIPTION OF THE DRAWINGS

In what follows, the invention will be described in more detail as a non-limiting example, illustrated in the appended drawings and explained in the following detailed description. Where possible, identical or corresponding elements have been indicated by means of the same reference designations in the drawings.
Figure 1 is a cross-sectional view illustrating principles of an energy generating arrangement powered by tidal water.
Figure 2 is a perspective view illustrating principles of an energy generating arrangement powered by tidal water, in an operating state,
Figure 3 is a perspective view illustrating principles of an energy generating arrangement powered by tidal water, in a service state,
Figure 4 is a front view illustrating a cylindrical assembly with a turbine unit,
Figure 5 is a cross sectional view illustrating an energy generating arrangement powered by tidal water,
Figure 6 is a cross sectional view illustrating a detail of the energy generating arrangement shown in figure 5,
Figure 7 is a cross sectional view illustrating a first, closer detail of the energy generating arrangement shown in figures 5 and 6,
Figure 8 is a cross sectional view illustrating a second, closer detail of the energy generating arrangement shown in figures 5 and 6, and
Figure 9 is a schematic cross sectional view of an energy generating arrangement, illustrating principles of a driving device for turning the cylindrical assembly.

### DETAILED DESCRIPTION OF EMBODIMENTS OF THE INVENTION

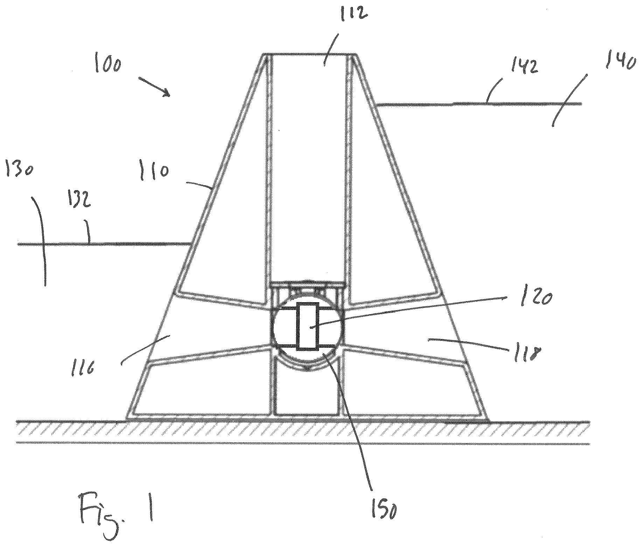

Figure 1 is a schematic diagram illustrating an energy generating arrangement 100 powered by tidal water.

The arrangement 100 includes a turbine unit 120, arranged in a fixed structure 110 which separates a first water mass 130 and a second water mass 140.

The fixed structure 110 may be a water barrier which wholly or partly constitutes an obstruction between a first water mass 130 on one side of a sound and a second water mass 140 on the other side of the sound. Alternatively, the fixed structure 110 may be a part of such a water barrier. For instance, the fixed structure 110 may constitute a water barrier module, and the water barrier may be constructed using a plurality of such interconnected modules.

An example of such a water barrier may be a barrage, lagoon or dam which essentially blocks off water across the whole cross-section of the sound, with the exception of through-flow areas in the barrier, where turbines may be arranged for harnessing the water flow.

However, in this document water barriers should also be understood to mean structures which only partly constitute an obstruction to flowing water. Other examples of water barriers may therefore be a breakwater, a partly submerged bridge, a flood barrier, sluices or the like. The water barrier may e.g. be located offshore or between parts of the mainland, or between a mainland area and an island, or between islands.

The arrangement disclosed herein is particularly useful in locations where the tidewater causes substantial water currents or substantial head difference from low tide to high tide, typically in narrow and shallow sounds.

In figure 1, the level 142 of the second water mass 140 has been illustrated to be higher than the level 132 of the first water mass 130. Under an opposite tidal condition the level of the first water mass 130 may instead be higher than the level of the second water mass 140. Hence, tidal activity leads to a change in the dominant direction of water flowing between the reservoirs or water masses, i.e., through the fixed structure 110.

In order to guide the water flow between the reservoirs or water masses, the fixed structure 110 is provided with a first, substantially horizontal duct 116 which extends from the first water mass 130 into a central cavity in the fixed structure, wherein the turbine unit 120 is arranged. Likewise, the fixed structure 110 is provided with a second, substantially horizontal duct 118 which extends from the second water mass 140 into the central cavity in the fixed structure 110, wherein the turbine unit 120 is arranged.

The first duct 116 and the second duct 118 may advantageously be funnel-shaped, in such a way that each duct's cross-sectional area is wider at the outer portion of the fixed structure 110, closer to the corresponding water mass, than at the central portion of the fixed structure 110, closer to the turbine unit 120. The cross-section of the first and second ducts may advantageously be circular throughout the length of each duct, although other possibilities exist.

Enabling the turbine unit 120 to turn within the cavity of the fixed structure 110 makes it possible to use a turbine that has a flow direction dependent efficiency. More specifically, it allows optimizing the turbine for one-directional flow. This will usually lead to an overall high efficiency of the energy generating arrangement 100.

Allowing the turbine unit 120 to turn within the fixed structure 110 makes it possible to use a mechanically simpler turbine with less need for regulation features, while still obtaining overall good efficiency. Also, the turbine may be used as a pump with better efficiency in both flow directions than a fixed turbine unit.

The turbine unit 120 may include a rotor with turbine blades, a shaft connected to the rotor, which will rotate when surrounding, flowing water acts on the rotor's blades, and an electric machine driven by the rotating shaft. The electric machine may be an electric generator. "Turning the turbine unit", as used herein, may mean turning the entire turbine unit, i.e. the assembly comprising rotor, shaft and electric machine, in such a way that the rotor is positioned in a different direction with respect to the surrounding water.

Many different types of turbine types may be employed for the turbine unit 120. For instance, a compact turbine such as the Straflo type turbine is suitable and simple to integrate into the energy generating arrangement 100. Other suitable turbines include Kaplan bulb turbines, other types of Kaplan turbines with or without guide vanes, Straflo matrix turbines, Hydro matrix turbines, VLH turbines and more.

In certain embodiments of the present invention, as opposed to the background art disclosed in WO-2005/017349, the turbine unit 120 is arranged to be turned within the fixed structure 110 about a horizontal or substantially horizontal axis 180. "Substantially horizontal" includes horizontal for practical purposes, including a tolerance range of, e.g., +/- 1 degree or +/- 2 degrees.

Possible advantages of the turning of the turbine unit about a substantially horizontal axis may include:
The turning mechanism may be simplified, with less friction surfaces, smaller diameters for the turning shaft and less moving parts in the overall system.

Any bearings can be placed dry, out of water.

Turning the turbine unit about a substantially horizontal axis may facilitate easier access for maintenance, replacement and inspection of critical parts.

Other advantages may also be recognized by the skilled person, e.g. by studying the present disclosure and/or by practicing the invention.

However, principles of the present invention may also apply in an alternative configuration wherein the turbine unit 120 may be turned about a non-horizontal axis, e.g. a vertical or a substantially vertical axis.

Advantagously, the turbine unit 120 is mounted in a substantially cylindrical assembly or casing 150 with a substantially horizontal axis.

The turbine type may influence size of the fixed structure, length and size of inflow and outflow duct, and size of the cylindrical assembly 150. Simple turbines like VLH will not require inflow and outflow duct, and may therefore reduce the size of the cylindrical assembly 150.

The cylindrical assembly 150 may be fitted with weights to ensure a balanced center of gravity, in order to reduce the necessary force/torque to turn the cylindrical assembly 150.

The turbine unit 120 may be mounted within the cylindrical assembly 150 and locked in place by means of locking means (not shown). During assembly, the turbine unit 120 is first mounted in the cylindrical assembly 150, then the locking means closes off the cylindrical assembly 150 and locks the turbine unit 120 in. This concept may also provide a disassembly possibility, for instance in case of a turbine exchange, due to service, malfunction or failure.

The cylindrical assembly 150 may be manufactured by use of various types of materials, e.g. metal, such as steel, concrete, or fiberglass.

The arrangement of the turbine unit 120 within a cylindrical assembly 150 may have several advantages: The enclosure of the whole turbine unit in the cylindrical assembly 150, such as the turret, makes it possible to shape the inlet and outlet of the cylindrical assembly 150 asymmetrically. This may have the effect of increasing overall efficiency in generating mode.

Advantageously, the fixed structure 110 is provided with a substantially cylindrical cavity which is configured to contain the cylindrical assembly 150 in such a way that the cylindrical assembly 150 may be turned within the cavity.

The fixed structure 110 may be manufactured by use of various types of materials, e.g., concrete, metal, such as steel, and fiberglass.

The cylindrical assembly 150 may be orientated in a configuration such that parts or itself in its entirety may be removed from the fixed structure 110 or installed into the fixed structure by lifting. Lifting may be done by the help of buoyancy in the cylindrical assembly 150 so that no, or less, further mechanical force is needed. To this end, the cylindrical assembly 150 may be provided with one or more watertight cavities, arranged and dimensioned in order to adjust the buoyancy of the cylindrical assembly.

The fixed structure 110 may be provided with a vertical duct 112 which extends from the top of the fixed structure 110 down to the cylindrical cavity that is provided for containing the cylindrical assembly 150. The vertical duct 112 may be provided on its inside with tracks that may guide the cylindrical assembly 150, and/or its shaft 160, into the correct position during installation. These tracks may also facilitate lift out during disassembly.

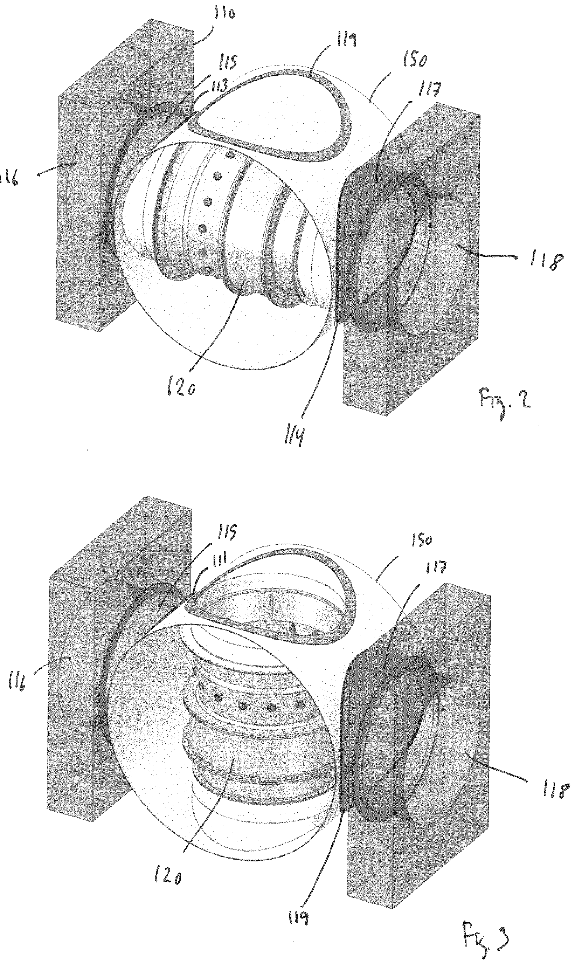

Figure 2 is a perspective view illustrating principles of an energy generating arrangement powered by tidal water, in an operating state, and figure 3 is a perspective view illustrating principles of the energy generating arrangement in a service state.

The turbine unit 120 is mounted within the cylindrical assembly 150 in the same way as has been described above with reference to figure 1.

The fixed structure 110 has been schematically illustrated in figure 2 and figure 3 as two separate vertical slices or lamellas. However, it should be understood that the fixed structure 110 may have another overall shape. Usually it will be designed as a single body, as already has been described with reference to figure 1, and the slices or lamellas shown in figures 2 and 3 may be regarded as parts, portions or substructures of the fixed structure 110.

In the operating state illustrated in figure 2, there is a water passage between the first 116 and the second 118 ducts, through the turbine unit 120 in the cylindrical assembly 150. This operational state is achieved by a suitable rotational position of the cylindrical assembly 150 within the fixed structure 110.

In the service state illustrated in figure 3, there is no water passage between the first 116 and the second 118 ducts, since the cylindrical assembly 150 blocks the passageway at the first 116 and the second 118 ducts. Hence, there is no flow of water through the turbine unit 120 in the cylindrical assembly 150. Instead, there is provided access to the turbine, e.g. for service purposes, from the top of the cylindrical assembly 150. This service state is also achieved by a suitable rotation of the cylindrical assembly 150 within the fixed structure 110.

When entering the service state, by the rotation of the cylindrical assembly 150, a volume of water that was contained in the turbine unit 120 must be removed, in order to make the turbine unit accessible for service/maintenance purposes. The water may be drained down, by gravity, to an area below the cylindrical assembly 150 and then drawn out to the first 130 or second 140 water mass, or to one of the ducts 116, 118, by means of a pump, e.g. an electrical pump.

In the following, the fixed structure 110 is also referred to as a caisson 110, and the cylindric assembly 150 is also referred to as a turret 150.

The portions of the fixed structure 110 that face the cylindrical assembly 150 will in general have curved surfaces, shaped to match a corresponding surface of the cylindrical assembly 150. This may either be provided by forming the corresponding portions of the fixed structure with a suitable shape, or by forming the corresponding portions of the fixed structure with a simpler shape, e.g. with a vertical side or wall, and by attaching a fitting to the vertical side or wall. In this case the fitting will provide the fixed structure 110 with the necessary, suitable curved surface to match the corresponding curved surface of the cylindrical assembly 150. In figures 2 and 3, such fittings are indicated at 115, 117.

Sealings are provided to seal a space between the curved surface of the fixed structure 110 and a corresponding surface of the cylindrical assembly 150. In figure 2, such sealings have been shown at 113 and 114.

As illustrated, the sealings 113, 114 have been provided at the curved surface of the cylindrical assembly 150. In an alternative configuration, the sealings may instead be provided at the curved surfaces of the fixed structure, e.g., on the curved surfaces of the fittings 115, 117.

Each sealing 113, 114 is expandable to alter between a sealing state, wherein the sealing fills the space between the curved surface of the fixed structure 110 and the corresponding surface of the cylindrical assembly 150, and a non-sealing state, wherein water passage is allowed between the fixed structure 110 and the cylindrical assembly 150.

To this end, the sealing may be inflatable by a fluid, e.g. a liquid, such as water, saline water, or a hydraulic fluid such as hydraulic oil, supplied to the sealing by a conduit.

Inflating the sealing requires that the pressure inside (internal) the seal is higher than the pressure outside (external), e.g. overcoming the surrounding hydrostatic pressure. The internal pressure increase is preferably obtained by injection of the fluid (e.g., liquid) in to the inflatable seal. The internal pressure required depends on the external pressure (depending on water depth) and the force required to obtain sufficient sealing. Moreover, the internal pressure can also be chosen to obtain a desired locking force between turret 150 and caisson 110. Deflating (deactivation) of the sealing may for example be conducted by evacuation of the injected fluid, e.g. by utilising the hydrostatic pressure or by utilising the inflation system.

Such a pressure raising device (inflation device) may, e.g., include the following: An injection fluid, and a reservoir holding the injection fluid may be provided depending on the injection-fluid utilised. A pressure increasing device in the form of pump. The pump type may be selected based on required internal pressure, the volume flow (inflation speed) and the number of start/stop cycles. For instance, a centrifugal pump, or a displacement pump may be used, the latter being suitable for higher internal pressure. Other pressure increasing systems such as accumulators are possible, but a pump of some sort is likely to be included upstream. A system of hoses and/or pipes that fluidly connect the pressure increasing device to the inflatable sealing is also provided, as well as valves, sensors and a control unit that enables controllable inflation, deflation and pressure monitoring of each sealing separately and the system as a whole.

Advantageously, each sealing 113, 114 is annular.

Each of the sealings 113, 114 are arranged at a flow position, i.e., they serve to provide sealing in the operating state of the energy generating arrangement, when water flows through the turbine unit 120. To this end, the sealings 113, 114 at the flow positions are arranged peripherally around a water inlet or outlet of the cylindrical assembly 150.

More particularly, the energy generating arrangement may comprise a first sealing 1 13 arranged peripherally around a water inlet of the cylindrical assembly 150 and a second sealing 114 arranged peripherally around a water outlet of the cylindrical assembly.

The energy generating arrangement may further comprise two additional sealings, each arranged at blocking positions of the cylindrical assembly 150. One such additional sealing has been illustrated at 119 in figures 2 and 3. The sealing 119 has been arranged at the surface of the cylindrical assembly, in particular around a closed portion of the surface of the cylindrical assembly. Advantageously, the sealing 119 at the blocking position has been arranged at the surface of the cylindrical assembly 150, at an angle of 90 degrees with respect to the sealings 113, 114 at the flow position. A similar or identical sealing 111 (shown on figure 3) which is also arranged at a blocking position, at the surface of the cylindrical assembly, is positioned opposite to the sealing 119, i.e., at an angle of 180 degrees with respect to the sealing 119.

In the operating state, as illustrated in figure 2, the sealing 119 at the blocking position serves the purpose of sealing the space between the upper portion of the cylindrical assembly 150 and the fixed structure 110, in particular at the vertical duct 112.

In the service state, as illustrated in figure 3, the cylindrical assembly 150 has been turned 90 degrees to the right by a controllable driving device. In the service state, the sealing 119 at the blocking position will, in conjunction with the blocking surface of the cylindrical assembly surrounded by the sealing 119, close the inlet/outet 118, thus preventing water from flowing through the energy generating arrangement.

Also, in the service state, as illustrated in figure 3, the sealing 111 at the blocking position will, in conjunction with the blocking surface of the cylindrical assembly surrounded by the sealing 119, close the inlet/outet 118, thus preventing water from flowing through the turbine unit 120.

Although four sealings 113, 117, 119 and 111 have been illustrated on figures 2 and 3 and described above, it should be understood that advantageous configurations are possible, which do not make use of all the four sealings.

For instance, one single sealing (e.g., sealing 113), arranged at the operational position, in particular at a water flow output, will provide technical advantages, including reduced water loss, hydraulic smoothness of through-flow, locking, and vibration damping.

As another example, two sealings (e.g., sealings 113 and 117), arranged at the operational positions, in particular at a water flow input and output, will provide such technical advantages, including reduced water loss, locking, and vibration damping, which may be further improved.

The use of four sealings, as shown in figures 2 and 3 and disclosed in the detailed description above, will contribute with further locking and vibration damping. In addition, they will provide useful technical advantages relating to service and maintenance, in particular the advantage of providing a "dry service room" for service/maintenance purposes.

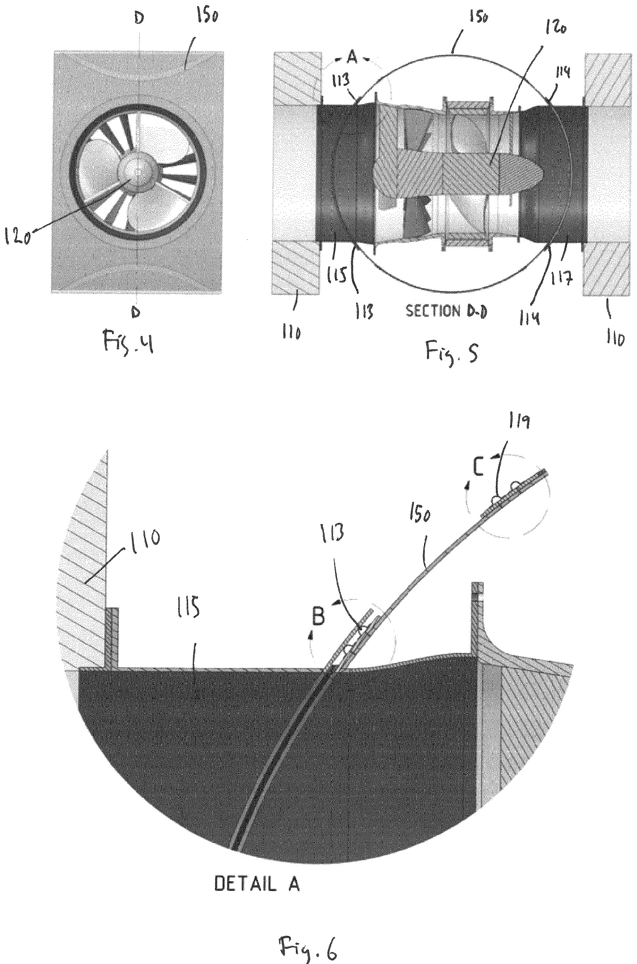

Figure 4 is a front view illustrating a cylindrical assembly 150 with a turbine unit 120. Figure 4 illustrates that the turbine unit 120 includes a rotor with turbine blades and a rotor shaft which will rotate when surrounding, flowing water acts on the rotor's turbine blades. The turbine unit 120 further includes an electric generator which is driven by the rotor shaft.

Figure 5 is a cross sectional view illustrating an energy generating arrangement powered by tidal water. The sectional view is taken along the line D-D shown on figure 4. Figure 5 illustrates in closer detail the fixed structure 110, the cylindrical assembly 150 with the turbine unit 120, fittings 115, 117, and sealings 113, 114 at operational positions, as already have been disclosed with reference to figures 1, 2, 3 and 4 above.

Figure 6 is a cross sectional view illustrating a detail of the energy generating arrangement shown in figure 5.

The detail of the energy generating arrangement shown in figure 5 corresponds to the circular portion denoted by A in figure 5.

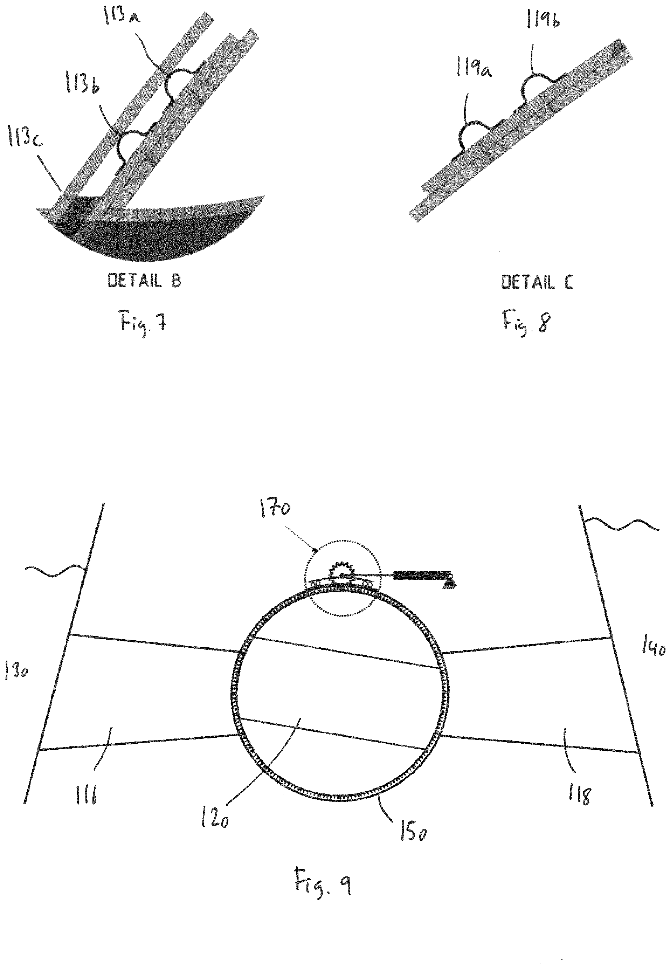

At the circular portion denoted B on figure 6 the sealing 113 is shown in expanded (e.g., inflated) state, filling the space between the curved surface of the fixed structure 110 and the curved surface of the cylindrical assembly 150. Further details of the sealing 113 have been illustrated and described with reference to figure 7 below.

At the circular portion denoted C on figure 6 the sealing 119 is shown in expanded (e.g., inflated) state. Although not visible on figure 6, the sealing 199 will fill the space between the curved surface of an upper part of the the fixed structure 110 (in particular, at the vertical duct 112) and the curved surface of the cylindrical assembly 150. Further details of the sealing 119 have been illustrated and described with reference to figure 8 below.

Figure 7 is a cross sectional view illustrating a first, closer detail of the energy generating arrangement shown in figures 5 and 6.

In particular, the detail shown in figure 7 corresponds to the circular portion denoted by B in figure 6.

The sealing 113 includes two separate seals 113a, 113b and a flow stopping device 113c. Each sealing 113a, 113b may be expandable, in particular inflatable, as already explained by reference to figures 2 and 3 above.

The use of two sealings 113a, 113b provides further advantages, including fail safe redundancy, but is not necessary to obtain the basic advantages of the invention.

The use of an additional flow stopping device 113c also provides further advantages, including relief of load on the sealings 113a, 113b. However, the flow stopping device is not necessary to obtain basic advantages.

Figure 8 is a cross sectional view illustrating a second, closer detail of the energy generating arrangement shown in figures 5 and 6.

In particular, the detail shown in figure 8 corresponds to the circular portion denoted by C in figure 6.

The sealing 119 includes two separate sealings 119a, 119b. A flow stopping device is not necessary for the blocking sealing 119. Each sealing 119a, 119b may be expandable, in particular inflatable, as already explained by reference to figures 2 and 3 above.

The use of two sealings 119a, 119b provides further advantages, compared to the use of only one sealing, including fail safe redundancy, but is not necessary to obtain the basic advantages of the invention.

Figure 8 is a cross sectional view illustrating a second, closer detail of the energy generating arrangement shown in figures 5 and 6.

In particular, the detail shown in figure 8 corresponds to the circular portion denoted by C in figure 6.

Eaxh expandable/inflatable seal used with the energy generating arrangement, such as those illustrated at 113a, 113b, 119a, 119b, may be fluidly connected to a fluid reservoir, e.g. a liquid reservoir through a pressure raising device such as a pump. Valves, sensors and a control device may also be arranged. The control system may control the pressure of each sealing independently.

Each expandable/inflatable sealing may be made of an elastic material. For instance, it may be made from an elastic coated fabric, typically NBR or HNBR with a polyamide fabric.

Each sealing can be attached to a corresponding sealing seat of the cylindrical assembly (turret) 150 by a variety of ways; one method is to vulcanize the coated fabric on to a steel ring which is fastened to the sealing seats by conventional fasteners, e.g. bolts.

The flow stopper, which in general is non-expandable/non-inflatable, may also be made from an elastic material, such as rubber or soft plastics. The material is in generally homogeneous but reinforcements (fabric) may be used to strengthen it if deemed necessary. The flow stopper may be fitted with holes that allow small amounts of water to freely move between the turbine runner and the inflatable seal. The water movement prevents build-up of large pressure differences, between caisson sealing seat and turret sealing seat, and also possible cavitation. The flow stopper may be fixated by regular fasteners, such as bolts, directly to a sealing seat of the cylindrical assembly (turret) 150.

The sets of sealing seats of the cylindrical assembly 150, i.e, the turret sealing seats, may be fixed to the turret by welding as the preferred method. The welding of seats may advantageously take place after the turret has been completed. This is to minimise deformations due to turret welding/assembly. Turret sealing seats are machined, in place, to their final specification after fixation (welding) to the turret. Machining the seats after turret completion allows for compensation of possible geometrical tolerance issues. Keeping the tolerance (gap) between turret sealing seat and caisson (fixed structure) sealing seat small is of interest for ensuring the strength/integrity of the inflatable seal.

The fixed structure may also have sealing seats. Such caisson sealing seats may be welded to the "caisson to turret fitting" before they are machined to their final specification. The caisson to turret fitting may be completed with sufficient strength prior to weldment of the caisson seats.

Figure 9 is a schematic cross sectional view of a energy generating arrangement, illustrating principles of a driving device for turning the cylindrical assembly 150 within the fixed structure 110.

The driving device 170 may further be arranged to lock the cylindrical assembly 150 at predetermined angular positions within the fixed structure 110.

In the illustrated configuration, the driving device 170 includes a pinion driven by a motor, cooperating with a toothed peripheral area around the cylindrical assembly 150. In other configurations, the driving device 170 may include an electrical motor with a rotating shaft connected to a gear or transmission device which propels the cylindrical assembly. The driving device 170 may include a chain drive connected between the shaft of the cylindrical assembly and the motor, the motor being attached to the fixed structure. In either case, the electric motor may be powered by an electric power supply. Alternatively, the driving device 170 may comprise linked hydraulic pistons that are connected to a periphery of a shaft of the cylindrical assambly, powered by a hydraulic power supply, i.e., hydraulic fluid under pressure.

The energy generating arrangement may further comprise a control device arranged to control the sealing and non-sealing states of the sealing. To this end, the control device may control valves or pumps that provides pressure to the expandable/inflatable sealings, in order to expand/inflate the sealings in accordance with a control signal.

The control device, or alternatively a separate control device, may further be arranged to control an angular position of the cylindrical assembly with respect to the fixed structure.

A power supply may be arranged, as appropriate, to power any power-demanding element or device of the present arrangement, such as pump(s), valve(s), control device(s), etc. The power supply may include a local electrical storage, such as a battery, and/or an external electric supply using a supply cable, and/or it may be supplied from the turbine-driven generator included in the power generating arrangement.

In an alternative operating mode, the turbine may work as a pump. In this operation mode the electric machine in the turbine may be operating as an electric motor. The turbine, working as a pump, may have a better efficiency in both directions than a conventional one-way turbine used as a pump. A one way turbine working like a pump needs to operate in both reverse pumping mode and forward pumping mode to be able to operate in both directions, the efficiency of these two operating modes is by nature different, due to shape of blades, guide vanes and shape of inner wall between turbine and fixed structure. For this invention the turbine only needs to operate in one of these modes, reverse pumping or forward pumping, and one turns the cylindrical assembly to ensure the optimum pumping efficiency in both directions.

The scope of the invention has been defined by the appended claims.

## Claims

1. An energy generating arrangement (100) powered by tidal water, comprising a turbine unit (120) mounted in a fixed structure (110) which separates a first (130) and a second (140) water masses, the turbine unit (120) being arranged to be turned within the fixed structure (110) about an axis (180),
the turbine unit (120) being mounted in a substantially cylindrical assembly (150), the turbine unit (120) including a rotor with turbine blades and a rotor shaft which will rotate when surrounding, flowing water acts on the rotor's turbine blades, and an electric generator which is driven by the rotor shaft,
the fixed structure (110) having curved surfaces shaped to match corresponding surfaces of the cylindrical assembly (150),
wherein a sealing is provided to seal a space between the curved surface of the fixed structure (110) and a corresponding surface of the cylindrical assembly (150),
the sealing being expandable to alter between a sealing state, wherein the sealing fills the space between the curved surface of the fixed structure (110) and the corresponding surface of the cylindrical assembly (150), and a non-sealing state, wherein water passage is allowed between the fixed structure (110) and the cylindrical assembly (150) and a driving device (170) for turning the cylindrical assembly (150) within the fixed structure (110), **characterised in that** the driving device includes a pinion driven by a motor, cooperating with a toothed peripheral area around the cylindrical assembly (150).

2. An energy generating arrangement according to claim 1,
wherein the axis (180) is a substantially horizontal axis.

3. An energy generating arrangement according to claim 1 or 2,
wherein the sealing is inflatable by a fluid.

4. An energy generating arrangement according to claim 3,
wherein the sealing is inflatable by the injection of a liquid into the sealing.

5. An energy generating arrangement according to one of the claims 1-4,
wherein the sealing is annular and arranged at an operational position, peripherally around a water inlet or outlet of the cylindrical assembly (150).

6. An energy generating arrangement according to claim 5,
comprising a first sealing arranged at peripherally around a water inlet of the cylindrical assembly (150) second sealing arranged peripherally around water outlet of the cylindrical assembly.

7. An energy generating arrangement according to claim 6,
further comprising two additional sealings, each arranged at service positions of the cylindrical assembly (150).

8. An energy generating arrangement according to one of the claims 1-7,
wherein the curved surface of the fixed structure (110) is provided by a fitting.

9. An energy generating arrangement according to one of the claims 1-8,
further comprising a flow stopper arranged between the curved surface of the fixed structure (110) and the corresponding surface of the cylindrical assembly (150).

10. An energy generating arrangement according to claim 1, wherein the driving device (170) is further arranged to lock the cylindrical assembly (150) at predetermined angular positions within the fixed structure (110).

11. An energy generating arrangement according to one of the claims 1-10, further comprising a control device arranged to control the sealing and non-sealing states of the sealing.

12. An energy generating arrangement according to claim 11, wherein the control device is further arranged to control an angular position of the cylindrical assembly (150) with respect to the fixed structure (110).

## Patentansprüche

1. Durch Gezeitenwasser betriebene Energieerzeugungsanlage (100), umfassend
eine Turbineneinheit (120), die in einer festen Struktur (110) montiert ist, welche eine erste (130) und eine zweite (140) Wassermasse trennt, wobei die Turbineneinheit (120) angeordnet ist, um innerhalb der festen Struktur (110) um eine Achse (180) gedreht zu werden,
wobei die Turbineneinheit (120) in einer im Wesentlichen zylindrischen Anordnung (150) montiert ist,
die Turbineneinheit (120) einen Rotor mit Turbinenschaufeln und einer Rotorwelle, die sich drehen wird, wenn umgebendes, fließendes Wasser auf die Turbinenschaufeln des Rotors wirkt, und einen elektrischen Generator, der von der Rotorwelle angetrieben wird, umfasst,
die feste Struktur (110) gebogene Oberflächen aufweist, die so geformt sind, dass sie zu entsprechenden Oberflächen der zylindrischen Anordnung (150) passen,
wobei eine Dichtung angeordnet ist, um einen Raum zwischen der gebogenen Oberfläche der festen Struktur (110) und einer entsprechenden Oberfläche der zylindrischen Anordnung (150) abzudichten,
die Dichtung expandierbar ist, um zwischen einem dichtenden Zustand, bei dem die Dichtung den Raum zwischen der gebogenen Oberfläche der festen Struktur (110) und der entsprechenden Oberfläche der zylindrischen Anordnung (150) ausfüllt, und einem nicht dichtenden Zustand, bei dem ein Wasserdurchgang zwischen der festen Struktur (110) und der zylindrischen Anordnung (150) möglich ist, zu wechseln, und eine Antriebsvorrichtung (170) zum Drehen der zylindrischen Anordnung (150) innerhalb der festen Struktur (110),
**dadurch gekennzeichnet, dass**
die Antriebsvorrichtung ein Ritzel umfasst, das von einem Motor angetrieben wird und mit einem gezahnten peripheren Bereich um die zylindrische Anordnung (150) zusammenarbeitet.

2. Energieerzeugungsanlage nach Anspruch 1, wobei die Achse (180) eine im Wesentlichen horizontale Achse ist.

3. Energieerzeugungsanlage nach Anspruch 1 oder 2, wobei die Dichtung durch ein Fluid aufblähbar ist.

4. Energieerzeugungsanlage nach Anspruch 3, wobei die Dichtung durch die Injektion einer Flüssigkeit in die Dichtung aufblähbar ist.

5. Energieerzeugungsanlage nach einem der Ansprüche 1 - 4, wobei die Dichtung ringförmig ist und in einer Betriebsposition, peripher um einen Wassereinlass oder -auslass der zylindrischen Anordnung (150), angeordnet ist.

6. Energieerzeugungsanlage nach Anspruch 5, die eine erste Dichtung, peripher um einen Wassereinlass der zylindrischen Anordnung (150) angeordnet, eine zweite Dichtung, peripher um einen Wasserauslass der zylindrischen Anordnung angeordnet, umfasst.

7. Energieerzeugungsanlage nach Anspruch 6, die ferner zwei zusätzliche Dichtungen, jede an Service-Positionen der zylindrischen Anordnung (150) angeordnet, umfasst.

8. Energieerzeugungsanlage nach einem der Ansprüche 1 - 7, wobei die gebogene Oberfläche der festen Struktur (110) durch ein Fitting bereitgestellt wird.

9. Energieerzeugungsanlage nach einem der Ansprüche 1 - 8, die ferner einen Strömungsstopper umfasst, der zwischen der gebogenen Oberfläche der festen Struktur (110) und der entsprechenden Oberfläche der zylindrischen Anordnung (150) angeordnet ist.

10. Energieerzeugungsanlage nach Anspruch 1, wobei die Antriebsvorrichtung (170) ferner angeordnet ist, um die zylindrische Anordnung (150) an vorbestimmten Winkelpositionen innerhalb der festen Struktur (110) zu verriegeln.

11. Energieerzeugungsanlage nach einem der Ansprüche 1 - 10, die ferner eine Steuervorrichtung umfasst, die angeordnet ist, um den dichtenden Zustand und den nicht dichtenden Zustand der Dichtung zu steuern.

12. Energieerzeugungsanlage nach Anspruch 11, wobei die Steuervorrichtung ferner angeordnet ist, um eine Winkelposition der zylindrischen Anordnung (150) in Bezug auf die feste Struktur (110) zu steuern.

## Revendications

1. Agencement de génération d'énergie (100) alimenté par la marée, comprenant une unité de turbine (120) montée dans une structure fixe (110) qui sépare des première (130) et deuxième (140) masses d'eau, l'unité de turbine (120) étant agencée pour être amenée à tourner au sein de la structure fixe (110) autour d'un axe (180),
l'unité de turbine (120) étant montée dans un ensemble sensiblement cylindrique (150), l'unité de turbine (120) comportant un rotor avec des aubes de turbine et un arbre de rotor qui entre en rotation lorsque l'eau en circulation environnante agit sur les aubes de turbine du rotor, et un générateur électrique qui est entraîné par l'arbre de rotor,
la structure fixe (110) ayant des surfaces courbées mises en forme pour concorder avec des surfaces correspondantes de l'ensemble cylindrique (150),
dans lequel un élément d'étanchéité est prévu pour étanchéifier un espace entre la surface courbée de la structure fixe (110) et une surface correspondante de l'ensemble cylindrique (150),
l'élément d'étanchéité étant dilatable pour se modifier entre un état étanche, dans lequel l'élément d'étanchéité remplit l'espace entre la surface courbée de la structure fixe (110) et la surface correspondante de l'ensemble cylindrique (150), et un état non étanche, dans lequel un passage d'eau est permis entre la structure fixe (110) et l'ensemble cylindrique (150) et un dispositif d'entraînement (170) pour faire tourner l'ensemble cylindrique (150) au sein de la structure fixe (110), **caractérisé en ce que** le dispositif d'entraînement comporte un pignon entraîné par un moteur, coopérant avec une région périphérique dentée autour de l'ensemble cylindrique (150).

2. Agencement de génération d'énergie selon la revendication 1,
dans lequel l'axe (180) est un axe sensiblement horizontal.

3. Agencement de génération d'énergie selon la revendication 1 ou 2,
dans lequel l'élément d'étanchéité est gonflable par un fluide.

4. Agencement de génération d'énergie selon la revendication 3,
dans lequel l'élément d'étanchéité est gonflable par l'injection d'un liquide dans l'élément d'étanchéité.

5. Agencement de génération d'énergie selon l'une des revendications 1 à 4,
dans lequel l'élément d'étanchéité est annulaire et agencé à une position fonctionnelle, de manière périphérique autour d'une entrée ou d'une sortie d'eau de l'ensemble cylindrique (150).

6. Agencement de génération d'énergie selon la revendication 5,
comprenant un premier élément d'étanchéité agencé de manière périphérique autour d'une entrée d'eau de l'ensemble cylindrique (150) et un deuxième élément d'étanchéité agencé de manière périphérique autour d'une sortie d'eau de l'ensemble cylindrique.

7. Agencement de génération d'énergie selon la revendication 6,
comprenant en outre deux éléments d'étanchéité supplémentaires, agencés chacun à des positions de service de l'ensemble cylindrique (150).

8. Agencement de génération d'énergie selon l'une des revendications 1 à 7,
dans lequel la surface courbée de la structure fixe (110) est formée par un raccord.

9. Agencement de génération d'énergie selon l'une des revendications 1 à 8,
comprenant en outre une barrière à l'écoulement agencée entre la surface courbée de la structure fixe (110) et la surface correspondante de l'ensemble cylindrique (150).

10. Agencement de génération d'énergie selon la revendication 1,
dans lequel le dispositif d'entraînement (170) est en outre agencé pour verrouiller l'ensemble cylindrique (150) à des positions angulaires prédéterminées au sein de la structure fixe (110).

11. Agencement de génération d'énergie selon l'une des revendications 1 à 10,
comprenant en outre un dispositif de commande agencé pour commander les états étanche et non étanche de l'élément d'étanchéité.

12. Agencement de génération d'énergie selon la revendication 11,
dans lequel le dispositif de commande est en outre agencé pour commander une position angulaire de l'ensemble cylindrique (150) vis-à-vis de la structure fixe (110).
